# EUROPEAN PATENT APPLICATION

(11) **EP 1 167 706 A1**
(43) Date of publication of application: **02.01.2002**
(21) Application number: 01305597.5
(22) Date of filing: 27.06.2001
(51) Int. Cl.: F01M 11/06, B64D 37/02

(54) **Fluid reservoir**

(30) Priority: 30.06.2000 GB 0016198
(71) Applicant: Lucas Industries Limited, West Midlands B90 4LA (GB)
(72) Inventor: Howard, Rodney Stuart, Hemel Hempstead, Hertfordshire HP1 1SP (GB)
(74) Representative: Beck, Simon Antony

(57) **Abstract**

An oil reservoir is described, and more specifically an oil reservoir used to supply first and second oil circuits within a device that may be subject to inversion, such as an electrical generator fitted to an aircraft. The reservoir has a first outlet 102 from which oil must be available irrespective of the orientation of the reservoir and a second outlet 104 from which oil flow must be interrupted if the generator is inverted. A feed to the first outlet is positioned in a central region of the reservoir where it remains immersed in fluid irrespective of the orientation of the reservoir. A second feed to the second outlet is located adjacent a normally lowermost region of the reservoir such that it is not in fluid flow communication with the reservoir when the reservoir is inverted.

## Description

The present invention relates to a fluid reservoir, and more specifically to a fluid reservoir used to supply first and second fluid circuits within a device which may be subject to inversion.

A fluid, such as oil, may be used within a single machine for many purposes. In the context of a constant speed generator within an avionics environment, the oil may be used to lubricate the bearings and other rotating parts, to act as a coolant within the generator, and to act as a control fluid within a speed conversion system associated with the generator to ensure that a variable input speed is converted to a near constant generator speed.

For a generator fitted to a civilian aircraft, it can be reasonably expected that the generator will always be used in an "upright" configuration or a near "upright" configuration. By this, it is meant that in use the orientation of the generator should not vary much from that orientation it would be in when the aircraft is parked. This is simply because the rates of turn, climb or descent experienced by civilian aircraft are generally low in order not to cause passenger discomfort. However, there are rare instances where civilian aircraft can undergo unexpected accelerations or adopt attitudes far outside that which would normally be expected by the user. These may, for example, occur when the aircraft experiences clear air turbulence or the pilot has to take emergency action. In these rare events, it is highly desirable that fluid flow be maintained to components forming parts of hydraulic control systems within the aircraft. It may also be desirable that lubrication or cooling flows of oils be discontinued during these moments of unusual acceleration, especially where such acceleration is likely to compromise the operation of an oil return system, which might therefore result in a build-up of oil, in, for example, the sump of a generator.

According to a first aspect of the present invention, there is provided a fluid reservoir for use in an apparatus which may be subjected to inversion, the reservoir having a first outlet from which fluid must be available irrespective of the orientation of the reservoir and a second outlet from which fluid flow must be interrupted if the apparatus is inverted, in which a feed to the first outlet is positioned in a central region of the reservoir where it remains immersed in fluid irrespective of the orientation of the reservoir, and a feed to the second outlet is located adjacent a normally lowermost region of the reservoir such that it is not in fluid flow communication with liquid in the reservoir when the reservoir is inverted.

It is thus possible to provide a reservoir which is able to maintain a flow of fluid to essential control systems irrespective of the orientation of the reservoir, but which can interrupt the supply of fluid to the cooling systems thereby inhibiting the potential build up of fluid in any part of the system which might result in component failure.

Preferably the reservoir has a nominal "upright" orientation and fluid flow via the second outlet occurs within a predetermined range of orientations away from the upright position.

Preferably the reservoir has a selectively closeable overflow positioned such that, during a filling operation, once fluid starts to flow from the overflow a user is assured that the reservoir contains sufficient fluid to ensure that the feed to the first outlet will remain in the fluid in the reservoir at all orientations of the reservoir. After the filling operation has been complete, the user can close the overflow outlet in order to ensure that fluid does not become lost from the reservoir and associated fluid filled system.

Preferably the reservoir is incorporated within an aircraft oil system.

According to a second aspect of the present invention, there is provided an oil system containing a reservoir according to the first aspect, and wherein oil from the second outlet is supplied to a device having a gravity drain to a sump, and oil is returned from the sump to the reservoir, and wherein oil supply to the device is interrupted during those orientations where oil is unable to drain from the device to the sump.

It is thus possible to provide an oil system which, for example, in the context of an electrical generator having a gravity drain to a sump, will stop oil accumulating in the generator when the generator is running under periods of inversion. This is important, since should oil continue to be pumped into the generator, the torque required to turn the generator would increase rapidly as the generator floods with oil and this in turn could give rise to failure of the generator drive components and also unacceptably high heat levels due to fluid pumping within the generator.

The principle of positioning the pick-up point such that flow is suspended or interrupted could be extended to other specific attitudes and acceleration conditions other than inversion or negative G.

The present invention will further be described, by way of example, with reference to the accompanying drawings, in which:
Figure 1 is a schematic cross section through a constant speed generator for use in an aircraft power generation system environment;
Figure 2 is a schematic diagram of the oil system of the generator shown in Figure 1; and
Figure 3 schematically illustrates an oil reservoir constituting an embodiment of the present invention.

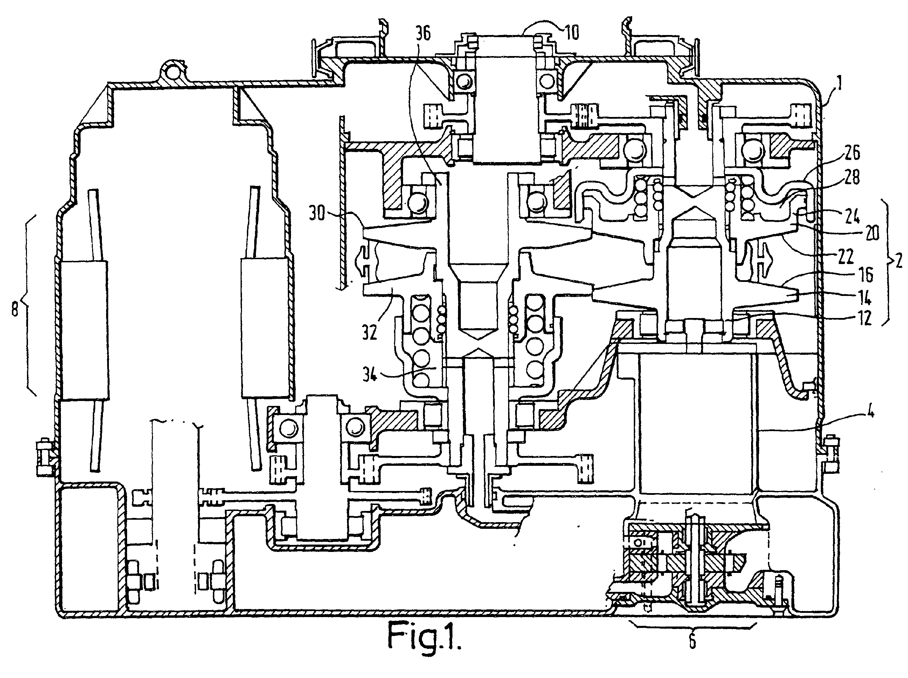

The generator shown in Figure 1 comprises a housing 1 which encloses a continuously variable transmission generally designated 2 utilising a belt drive, a low pressure pump 4, a high pressure pump 6, a generator, generally designated 8, and an oil system disposed throughout the housing 1.

The belt drive 2 enables the variable speed of an input shaft 10 which receives a drive from a spool of a gas turbine engine to be converted to a near constant speed such that the generator 8 can be run at a near constant speed. In order to do this, a first shaft 12 of the belt drive mechanism carries a flange 14 which defines an inclined surface 16 against which a drive belt bears. The shaft 12 also carries a coaxially disposed movable flange 20 drivingly connected to the shaft 12 via a splined portion (not shown). The movable flange 20 defines a further inclined surface 22 facing towards the surface 16, which surfaces serve to define a V-shaped channel whose width can be varied by changing the axial position of the flange 20 with respect to the fixed flange 14. The flange 20 has a circularly symmetric wall 24 extending towards and co-operating with a generally cup shaped element 26 carried on the shaft 12 to define a first hydraulic chamber 28 therebetween which is in fluid flow communication via a control duct (not shown) with an associated control valve. Similarly, a fixed flange 30 and a movable flange 32 are associated with a second shaft 36 and associated with a second hydraulic control chamber 34. A steel segmented belt having a cross-section in the form of a trapezium, with the outer most surface being wider than the inner most surface is used to interconnect the first and second variable ratio pulleys formed between the pairs of fixed and movable flanges, respectively, in order to drivingly connect the flanges.

The position of each movable flange with respect to the associated fixed flange is controlled by the hydraulic actuators. Since the interconnecting belt is of a fixed width, moving the flanges closer together forces the belt to take a path of increased radial distance. The interconnecting belt has a fixed length, and consequently as one movable flange is moved towards its associated fixed flange, the other movable flange must move away from its associated fixed flange in order to ensure that the path from an arbitrary starting point, around one of the pulleys, to the second pulley, around the second pulley and back to the fixed arbitrary starting point remains a constant distance.

It is important in such a pulley system that the position of the flanges can be well controlled. It is also important that the compressive force exerted upon the belt can be well controlled since belt wear increases rapidly with compressive force but belt slippage is damaging to both the belt and the pulleys. Thus a controller or control system (not shown) is provided which controls both the drive ratio and the compressive load exerted on the belt. It is important that the controller can rapidly change the hydraulic pressures and fluid volumes within the hydraulic chambers 28 and 34, and this requires that the hydraulic fluid must have very little or no air entrained therein. This is because air bubbles are by their very nature compressible and the air bubbles will compress when an increase in hydraulic pressure is made in preference to movement of the actuating surfaces. The hydraulic system may require hydraulic pressures in the region of 100 bar. This requires the use of a high pressure pump in order to achieve this hydraulic pressure. The action of pumping fluid to this pressure warms the fluid, and as a result it is not possible, within the limited space available within an aircraft for these components, to utilise a dedicated supply of control fluid since only a small volume of fluid could be provided and this would suffer unacceptable heat rejection problems. Therefore, in order that the heating of the control fluid does not become a problem, the lubricating oil within the generator is also used as the control fluid for the continuously variable transmission. This solves the heat rejection problem, but does mean that the hydraulic control fluid is no longer within a closed system. It therefore becomes important to take measures to ensure that the supply of oil to the hydraulic system is maintained irrespective of the orientation of the aircraft or the acceleration being experienced by the aircraft.

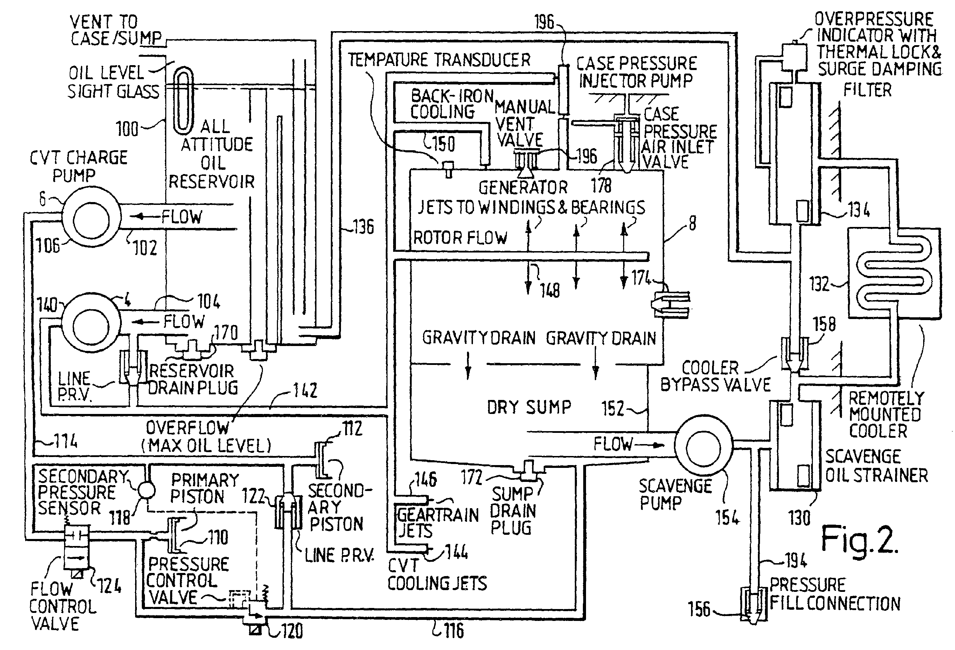

Figure 2 schematically illustrates the oil system within the power generation system. An oil reservoir 100 acts to contain de-aerated oil. The reservoir has a first outlet 102 connected to an inlet of the high pressure pump 6 and a second outlet 104 connected to an inlet of the low pressure pump 4. An outlet 106 of the high pressure pump 6 provides oil which is ducted towards a primary piston 110 formed by movable flange 20 and the cup shaped element 26 (Figure 1) thereby defining the first hydraulic control chamber 28, and a secondary piston 112 (similar to the primary piston) which contains the second hydraulic control chamber 34. As shown in Figure 2, both the primary piston 110 and the secondary piston 112 can be regarded as being connected between a high pressure supply line 114 and a low pressure return line 116. The pressure in the high pressure line 114 is measured by a pressure sensor 118 and supplied to a controller (not shown). The controller uses a measurement of oil pressure, aero-engine drive speed and/or generator speed and electrical demand to schedule and/or control the hydraulic pressure acting in the primary and secondary pistons. The secondary piston 112 is connected directly to the high pressure line 114. However, the pressure within the high pressure line 114 can be controlled by spilling pressurised lubricant from the high pressure line 114 to the low pressure return line 116 via an electrically controlled pressure control valve 120 connected between the high pressure and low pressure lines, respectively. Thus in order to increase the hydraulic pressure within the secondary piston 112, the pressure control valve 120 is moved to restrict flow therethrough, and in order to release pressure within the secondary piston, the pressure control valve 120 is opened. A normally closed pressure return valve 122 is connected between the fluid port to the secondary piston 112 and the low pressure return line 116.

The valve 122 is normally closed, but is set to open at a predetermined pressure in order to protect the hydraulic system in the event of system over pressure.

The primary piston 110 receives high pressure fluid from the high pressure line 114 via an electrically operated flow control valve 124. The valve 124 is in series with the pressure control valve 120 between the high pressure line 114 and the low pressure line 116, and the primary piston 110 is connected to the node between these valves. This configuration of valves means that the pressure control valve 120 can be used to simultaneously increase the pressure in both the primary and secondary pistons in order to prevent belt slippage, whereas the balance of flow rates through the control valve 124 and the pressure control valve 120 sets the relative positions of the primary and secondary pistons. Oil from the low pressure line 116 is returned to the sump 152.

An outlet 140 of the low pressure pump 4 supplies oil via supply line 142 to oil cooling jets 144 for spraying oil onto the moving parts of the continuously variable transmission, to jets 146 for spraying oil onto the gear train interconnecting the transmission to the generator, to jets 148 for lubricating the windings and bearings within the generator and also along a cooling path 150 for cooling the stator within the generator.

The generator 8 has a gravity drain to a dry sump 152. Oil collecting in the sump 152 is pumped out of the sump by a single scavenge pump 154. The output line from the scavenge pump connects with the low pressure return line 136 via an oil strainer 130, a remotely mounted oil cooler 132 and an oil filter 134. A pressure fill connector 156 is in fluid flow communication with the low pressure return line 194 in order to allow the oil system to be filled. An oil cooler by-pass valve 158 is connected between the output from the strainer 130 and the line 136 in order to by-pass the oil cooler and oil filter during cold start or in the event of cooler, filter or external line blockage. The oil by-pass valve is normally closed and set to open at a predetermined over pressure.

In order to drain the system, a drain plug 170 is provided in the reservoir, similarly a drain plug 172 is provided for the sump and a pressure operated vent valve 174 is provided in the generator in order to relieve the excess pressure occurring within the generator. A manually operated vent valve 176 is provided to vent pressure from the generator. An automatic air inlet valve 178 is provided to allow air to enter the generator via an injector pump 196 to provide positive internal pressure.

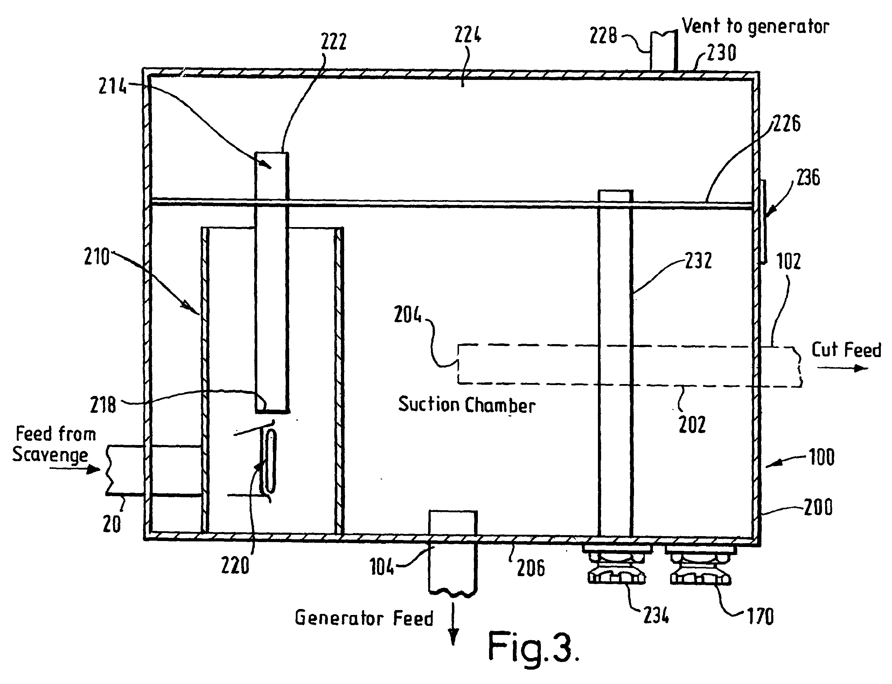

The reservoir 100 is shown in greater detail in Figure 3. The reservoir 100 comprises a wall 200 defining a closed chamber which acts as the body of the reservoir. The first outlet 102 is in fluid flow communication with an internal pipe 202, the pipe being represented by the chain line in Figure 3, which extends from the wall 100 into the centre of the reservoir 100 where the pipe has an open end 204. Thus, provided that the volume of liquid within the reservoir exceeds a predetermined minimum, the end 204 will always be below the surface of the liquid irrespective of the orientation of the reservoir. This ensures that a continuous supply of liquid is available via the outlet 102 to the high pressure pump 6. The second outlet 104 is formed in a lower wall 206 of the reservoir. Thus, with the reservoir in the "upright" configuration as shown in Figure 2, the second outlet is able to supply oil to the low pressure pump 4. However, should the reservoir become inverted or the aircraft undertake a power dive to the extent that apparently zero or negative G forces are experienced by the aircraft, the oil will move away from the second outlet 206 and the supply of oil to the low pressure pump will be inhibited. This therefore stops oil being supplied to the generator at a time when its gravity drain to the sump 152 is not working. Thus the generator is prevented from being flooded with oil, which would increase hydrodynamic losses within the generator and it could possibly give rise to component failure.

The reservoir acts to contain de-aerated oil for use by the high pressure pump. To this end, the reservoir contains a vortex de-aerator 210 which may comprise one or more cylindrical chambers into which oil is introduced tangentially via nozzles 220 in order to create a rapidly swirling vortex of oil within the de-aerator 210. As the oil swirls within the chamber, it undergoes rotational acceleration, in order to form a circular path around the chamber, and the centripetal forces set up act to cause the oil to move towards the wall of the chamber, and air entrained in the oil to move towards the axis of the chamber. A dip tube 214 extends into the de-aerator 210 and has an open end 218 just above the uppermost region of the nozzle 220. An upper end 222 of the hollow dip tube 214 extends into a plenum chamber 224 formed in an upper portion of the reservoir 100 and separated from the normally oil containing portion of the reservoir 100 by a baffle plate 226. A vent 228 is provided in an upper wall 230 of the reservoir to vent air to the sump 152.

The reservoir includes an overflow 232 sealed by a removable plug 234 such that, during filling or maintenance oil can be introduced into the reservoir via the pressure fill connector 156 as shown in Figure 2 and the various flow paths into the reservoir, in order to flood the reservoir until such time as oil starts to flow out of the overflow. The user is then assured that sufficient oil is in the reservoir in order to maintain an unbroken supply of oil to the high pressure pump 6 irrespective of the orientation of the reservoir/aircraft or acceleration experienced thereby. The drain plug 170 is provided to drain the oil from the reservoir should this be necessary during a maintenance schedule, and a sight glass 236 is provided in order that maintenance personnel can visually inspect the oil level within the reservoir.

It is thus possible to provide an oil reservoir, in combination with a control and lubrication system, which ensures that oil for control purposes is continuously available to a high pressure pump irrespective of the acceleration or orientation experienced by the reservoir or oil system and that the feed of oil for a lubricating system can be inhibited under such conditions whereby oil cannot be drained by the lubricating system and returned to the reservoir.

## Claims

1. A fluid reservoir (100) for use in an apparatus that may be subjected to inversion, the reservoir (100) having a first fluid outlet (102) having a first feed (204) and a second fluid outlet (104) having a second feed, wherein said first feed (204) to the first fluid outlet (102) is positioned in a central region of the reservoir (100) where it remains immersed in fluid irrespective of the orientation of the reservoir, and said second feed to the second fluid outlet (104) is located adjacent a normally lowermost region of the reservoir (100) such that it is not in fluid flow communication with liquid in the reservoir when the reservoir is inverted.

2. A fluid reservoir according to claim 1, wherein the reservoir (100) has a nominal "upright" orientation and fluid flow via the second fluid outlet (104) occurs within a predetermined range of orientations away from the upright orientation.

3. A fluid reservoir according to claim 1 or 2, wherein the reservoir (100) has a selectably closeable overflow outlet (232) positioned such that, during a filling operation, once fluid starts to flow from the overflow outlet a user is assured that the reservoir (100) contains sufficient fluid to ensure that the first feed (204) to the first fluid outlet (102) will remain in the fluid in the reservoir at all orientations of the reservoir.

4. A fluid reservoir according to claim 3, wherein said overflow outlet (232) is arranged to be closeable to ensure that fluid does not become lost from the reservoir (100).

5. A fluid reservoir according to any preceding claim incorporated within an aircraft oil system.

6. An oil system including an oil reservoir (100) according to any one of claims 1 to 5, wherein oil from the second fluid outlet (104) is supplied to a device having a gravity drain to a sump (152) and oil is returned from the sump to the reservoir (100), and wherein oil supply to the device is interrupted during those orientations where oil is unable to drain from the device to the sump.

7. An oil system according to claim 6, wherein said device comprises an electrical generator.
